# EUROPEAN PATENT SPECIFICATION

(11) **EP 2 141 625 B1**
(45) Date of publication and mention of the grant of the patent: **07.10.2015**
(21) Application number: 09251647.5
(22) Date of filing: 25.06.2009
(51) Int. Cl.: G06F 21/57

(54) **System and method to secure boot UEFI firmware and UEFI-aware operating systems on a mobile internet device (mid)**
System und Verfahren zum sicheren Booten von UEFI-Firmware und UEFI-fähige Betriebssysteme auf einem mobilen Internetgerät (MID)
Système et procédé pour sécuriser des micrologiciels de démarrage UEFI et des systèmes d'exploitation fonctionnant avec UEFI sur un dispositif Internet mobile

(30) Priority: 30.06.2008 US 165593
(43) Date of publication of application: 06.01.2010
(73) Proprietor: Intel Corporation, Santa Clara, CA 95054 (US)
(72) Inventor: Zimmer, Vincent J, Federal Way, WA 98003 (US); Rothman, Michael A, Puyallup, WA 98374 (US)
(74) Representative: Beresford, Keith Denis Lewis

(56) References cited:
- EP-A1- 0 849 657
- EP-A2- 1 975 836
- WO-A1-2007/062955
- US-A- 5 844 986

## Description

### COPYRIGHT NOTICE

Contained herein is material which is subject to copyright protection. The copyright owner has no objection to the facsimile reproduction of the patent disclosure by any person as it appears in the Patent and Trademark Office patent files or records, but otherwise reserves all rights to the copyright whatsoever.

### FIELD OF THE INVENTION

An embodiment of the present invention relates generally to mobile computing platform and, more specifically, embodiments of the invention add a capability for a platform owner or administrator to ensure that the firmware is only executed in an owner-authorized fashion, such as with signed components. Embodiments may extend the Core Root of Trust for Measurement (CRTM), via use of a cryptographic coprocessor in a mobile device as a Root-of-Trust for Storage (RTS) Storage Root Key (SRK), into a unified extensible firmware interface (UEFI) Platform Initialization (PI) image authorization and boot manager.

### BACKGROUND INFORMATION

Various mechanisms exist for secure booting. The Unified Extensible Firmware Interface (UEFI) specification defines a new model for the interface between operating systems and platform firmware. The interface consists of data tables that contain platform-related information, plus boot and runtime service calls that are available to the operating system and its loader. Together, these provide a standard environment for booting an operating system and running pre-boot applications. More information about UEFI may be found on the public Internet at URL *www*uefi*org*/*home.* Please note that periods have been replaced with asterisks in this document to prevent inadvertent hyperlinks. The UEFI standard may be used to assist with secure boot up of a platform.

Chapter 26 of the UEFI Specification 2.1 describes a protocol for secure boot. The defined protocol provides access for generic authentication information with specific device paths. The protocol may be used on any device handle to obtain information associated with the physical or logical device. Public keys and certificates may be kept on the firmware and check digital signatures on third part (U)EFI drivers and Operating System (OS) loaders. Binding public keys to the platform has been a deployment problem. The security is only as good as the platform can securely store the public keys (i.e., the dreaded "key management problem"). Revocation at boot time of a public key or certificate is not possible, since the early boot environment cannot access a network and ascertain a certificate revocation list (CRL) from a server. Counterfeit loaders may be inserted in to the platform to circumvent the security. Thus, this method of secure booting may still be vulnerable to attacks during boot time.

Mobile devices, and more specifically mobile Internet devices (MID), have become ubiquitous in use. Various mechanisms exist for booting the mobile devices, which may vary from methods used to boot desktop and laptop systems. In desktop and server platforms a trusted platform module (TPM) component, which is a type of chip documented by the Trusted Computing Group (TCG), with the latest variant approved being version 1.2, may be used to assist in secure booting. The TPM may serve to protect firmware boots on these types of platforms when coupled with processor/chipset technologies such as AMD Corporation's Presidio and its SKINIT instruction or Intel Corporation's Trusted-eXecution-Technology (TXT) (aka LaGrande Technology) using a SENTER instruction. However, MID processors do not support Trusted execution Technology (TXT) or TCG 1.2 TPM's, so the "secure booting" of firmware and a root-of-trust in the platform is required as part of the operating system (OS) bootstrap. It may be desirable to protect the firmware boot on a MID prior to the operating system launch, for added security. This is especially true because high value content, such as music and other multi-media, may be used on MID systems, requiring higher protection demanded by the content providers.

EP 0849657 A1 describes a secure data processing system in which comprises a central processor unit, memory and a security circuit in the form of an application specific integrated circuit. The security circuit has a cryptographic engine and a cryptographic key store. The cryptographic engine operates on the contents of the cryptographic key store to generate a digital signature. Means provided generate a digital signature from a software or hardware component to be checked for authenticity and to compare the digital signature from the component with the generated digital signature. An indication of the authenticity of the component is generated as a result of the comparison. The components of the system that can be checked include the boot firmware for the system, the operating system and plug-in cards for the system.

WO 2007/062955 describes a secure digital certificate storing scheme for flash memory and electronic apparatus in which the certificate authenticate a computer program and are verified by a verification program associated with the computer program.

US 5,844,986 describes a subsystem that prevents unauthorized modification of BIOS program code embedded in modifiable nonvolatile memory devices such as flash memory. A cryptographic coprocessor containing the BIOS memory device performs authentication and validation on the BIOS upgrade based on a public/private key protocol. The authentication is performed by verifying the digital signature embedded in the BIOS upgrade.

EP 1975836 A2 describes securely booting a platform using one or more signature keys stored in a secure location on the platform, where access to the signature is by a microcontroller on the platform and the host processor has no direct access to alter the signature key.

Aspects of the present invention are set out in the appended independent claims.

### BRIEF DESCRIPTION OF THE DRAWINGS

The features and advantages of the present invention will become apparent from the following detailed description of the present invention in which:
Figure 1 is a block diagram illustrating a hierarchy of signature keys used to ensure boot and system integrity in systems using signing technology;
Figure 2 is a diagram illustrating the flow when a platform owner takes ownership and generates a platform credential by means of the security processor, according to an embodiment of the invention;
Figure 3 is a flow chart illustrating a method for taking ownership and enrolling platform credentials, according to an embodiment of the invention;
Figure 4 illustrates exemplary C code used to implement an embodiment of the invention;
Figure 5 is a block diagram illustrating an exemplary structure of the certificate database, according to an embodiment of the invention;
Figure 6 is a flow chart illustrating a method where the platform owner enrolls third party authentication credentials, according to an embodiment of the invention;
Figure 7 is a flow chart illustrating a method where the platform owner enrolls a digital signature, according to an embodiment of the invention;
Figure 8 is a flow chart illustrating an exemplary method for authorizing UEFI executables, according to an embodiment of the invention;
Figure 9 is a block diagram illustrating a platform having a primary processor element and a security processing chipset, according to embodiments of the invention; and
Figure 10 is a block diagram of an exemplary cryptographic unit having an embedded security processor, according to an embodiment of the invention.

### DETAILED DESCRIPTION

An embodiment of the present invention is a system and method relating to mobile devices. For illustrative purposes, embodiments of the invention are described as related to a mobile Internet device (MID). However, it should be understood that embodiments of the invention may be applicable to cellular telephones, portable MP3 players, personal digital assistants (PDAs) or other mobile devices not having Internet access. Embodiments of the invention add a capability for a platform owner or administrator, to ensure that the firmware is only executed in an owner-authorized fashion, such as with signed components. Embodiments may extend the Core Root of Trust for Measurement (CRTM), via use of a cryptographic coprocessor in a mobile device as a Root-of-Trust for Storage (RTS) Storage Root Key (SRK), into a unified extensible firmware interface (UEFI) Platform Initialization (PI) image authorization and boot manager.

Reference in the specification to "one embodiment" or "an embodiment" of the present invention means that a particular feature, structure or characteristic described in connection with the embodiment is included in at least one embodiment of the present invention. Thus, the appearances of the phrase "in one embodiment" appearing in various places throughout the specification are not necessarily all referring to the same embodiment.

For purposes of explanation, specific configurations and details are set forth in order to provide a thorough understanding of the present invention. However, it will be apparent to one of ordinary skill in the art that embodiments of the present invention may be practiced without the specific details presented herein. Furthermore, well-known features may be omitted or simplified in order not to obscure the present invention. Various examples may be given throughout this description. These are merely descriptions of specific embodiments of the invention. The scope of the invention is not limited to the examples given.

Embodiments of the invention take an opaque "OEM Boot Module" and apply a UEFI secure boot and policy-based dispatch of platform initialization (PI) based firmware to effect the security solution and enabling for original equipment manufacturers (OEM) and original design manufacturers (ODM) marketing the MID. Specifically, this art involves secure-booting platform drivers, third party options ROM's (O-ROMs), and OS Loaders, such as Winload.efi (for Microsoft Windows®) and eLilo.efi (for Linux). eLilo is the standard Linux boot loader for EFI-based PC hardware. Embodiments eliminate the dangers of exposing the private-key when the platform owner has to sign the payload prior to calling authenticated variable services. Embodiments also complement a Single Sign-On (SSO) scenario, and 1-touch provisioning. For instance, the platform owner may take ownership in both OS and pre-OS phase with same authorization data.

An embodiment of the invention utilizes a security processor on the MID to manage a private signing key. This allows a UEFI secure boot with a security processor policy engine to seamlessly integrate into manageability and provisioning infrastructure.

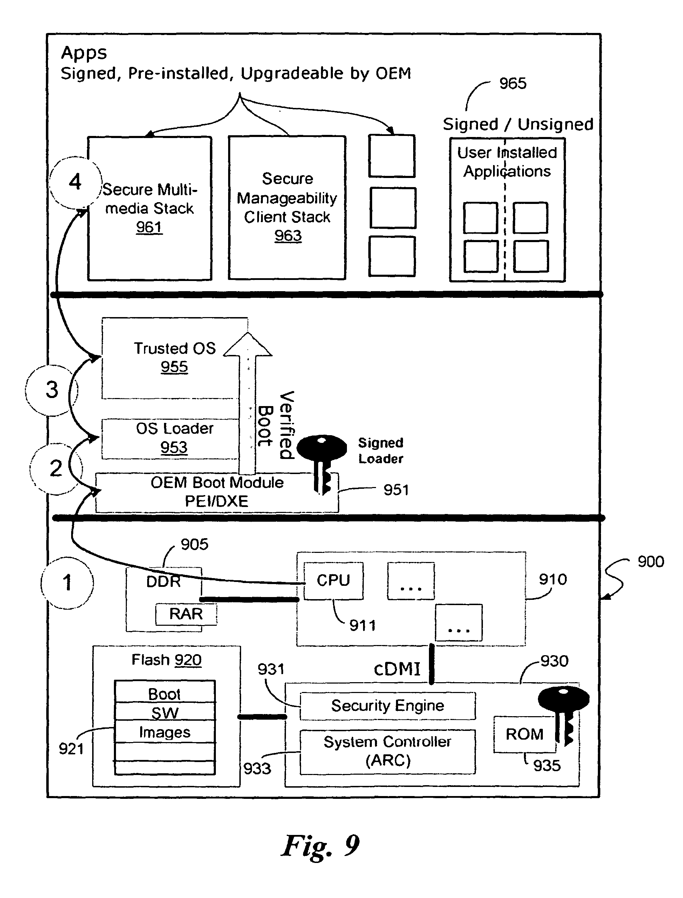

Referring to Figure 9, there is shown a block diagram illustrating a platform 900 having a primary, or host, processor element 910 and a security processing chipset 930. In embodiments of the invention, the platform 900 has a primary runtime environment 910 with a primary processor 911 needing a secure OS boot to protect from malware. Processor 911 its communicatively coupled to system memory 905. A security processor chipset unit 930 may have a security engine, or processor, 931, a system controller (ARC) 933 (which does some of the platform initialization prior to loading the x86 firmware) and dedicated read-only memory (ROM) 935. ROM may be used to further secure code and data to ensure a secure boot; when it is read-only, the code and data may not be changed by malicious tampering. Flash memory 920 is coupled to the security processor, and holds the boot software images 921 for booting the primary processor 911. It is important to confirm that the boot software images to be loaded on the primary processor 911 are authorized and free of malware.

In an embodiment, a verified boot may be implemented using the security chipset 930. A security engine 931 is configured to implement the key and signing procedures, as discussed below. Since the security processor 931 is a specialized device, sequestered from access by the primary processor 911, the security engine is protected from tampering. The security engine is configured to validate the boot ROM for the primary processor, before allowing the primary processor to boot. In existing systems, for instance an Intel® Core™ 2Duo-based personal computer (PC), the primary processor just automatically passes boot control to whatever is in the Flash part, i.e., Boot ROM, without validation. In some desktop, laptop or other full capability PCs, TXT technology may intervene to validate the Boot ROM and subsequent processing. The platform is put into a secure state late into the launch process; specifically, TXT microcode launched by the SENTER instruction will synchronize all processors on the platform and allow for the measured launch environment (MLE) to be independent of all of the software that ran prior to it, including option ROM's and platform BIOS. However, TXT processing is not available on MIDs and other lower cost platforms. In embodiments, the security processor may be added to MIDs to validate the Boot ROM, as an alternative to TXT in other systems. However, in embodiments of a MID having a secure processor, only the OEM boot module is capable of being verified.

The OEM boot module 951 is basically the UEFI firmware. The security processor 930 validates the OEM boot module 951. Once validated, the security processor 930 copies the OEM boot module 951 to SRAM 905 of the primary processor 911. The OEM boot module may encompass pre-EFI initialization (PEI) and driver execution environment (DXE). These phases are required to be run before an operating system (OS) may be launched. In some systems, once the OEM boot module is executed, the OS loader 953 may be launched from the PEI phase. The OS loader 953 launches a trusted OS 955. However trust of the OS is assumed in these systems, rather than actually verified. Embodiments of the invention are enabled to validate the OS loader and other EFI modules, beyond just verifying the OEM boot module 951. This provides the capability to store multiple signed OS instances and verify signed applications.

It should be understood that in existing MID systems, the boot module, OS loader and OS code may be stored as one executable image. Implementing UEFI architecture on the MID allows for segregation of images for each phase of a boot and OS load. Embodiments of the invention take advantage of UEFI architectural constructs so that each individual image may have its own digital signature, and be verified independently. This also allows individual components to be updated or changed, as desirable.

In some embodiments, it might be desirable to offer the capability to boot alternative operating systems in a MID. For instance, it would be more convenient for cellular phone users to change the subscription among cellular carriers on the same smart phone, if multiple operating systems were already loaded into the phone, or capable of being loaded remotely and properly authorized. In this case, it would be desirable for a user to request a reboot from a new carrier and have the carrier reboot the MID (smart phone) with their custom software rather than forcing the user to buy a new phone. It might also be desirable to boot different operating systems, based on preferred application of the device, even while staying with the same carrier. It is important, however, for the new operating system launch to be validated and authorized. It will be understood that even though' for illustrative purposes we refer to a mobile *Internet* device, other applications may be selectively installed on the mobile device, such as camera capability or music storage and play, but that Internet access is not required to implement the embodiments.

When the MID uses UEFI architecture, alternate operating systems may utilize UEFI OS loaders, the UEFI firmware may communicate with the security processor and store authenticated variables and certificates for signing the EFI drivers and loaders in non-volatile memory; the authenticated variables can be stored in the non-volatile memory of security processor and/or in a secure area of platform flash and be signed by security processor's RSA engine. The security processor may guarantee that the driver execution environment (DXE) and pre-EFI initialization environment (PEI) code are correct and uncorrupted. The DXE phase may then use the capabilities of the security processor to manage credentials and certificates for a UEFI secure boot.

The security processor may have its own memory storage that is inaccessible to the primary processor. Keys and certificates may be stored securely in the security processor storage without risk of tampering by malicious code executing on the primary processor. In another embodiment, keys and certificates may be stored in a secure area of the host processor flash memory that is inaccessible to the host processor. This partitioning may be enabled by the platform chipset, and allow access only to the security processor.

In order to verify the OEM boot module, typically the OEM stores a public key on the chipset of the MID. The OEM boot module is signed and may be checked with the public key. When the signed module is verified by the security processor, the chipset releases the module to the primary processor to begin booting.

It may be desirable to maintain a secure multi-media stack 961, secure manageability stack 963 (i.e., media-player software such as Helix from RealNetworks, Inc.) and verify signed applications 965 among the various applications to be executed on the MID; a platform cannot build trust in these applications if the pre-boot environment is not trusted, up-to-and-including the OS loader. Embodiments of the invention ensure that these applications are verified, in addition to the OEM boot module. Thus, embodiments of the invention ensure that all modules executing on the MID primary processor have been verified and authenticated using keys and signing technology, where the keys are managed by the security processor.

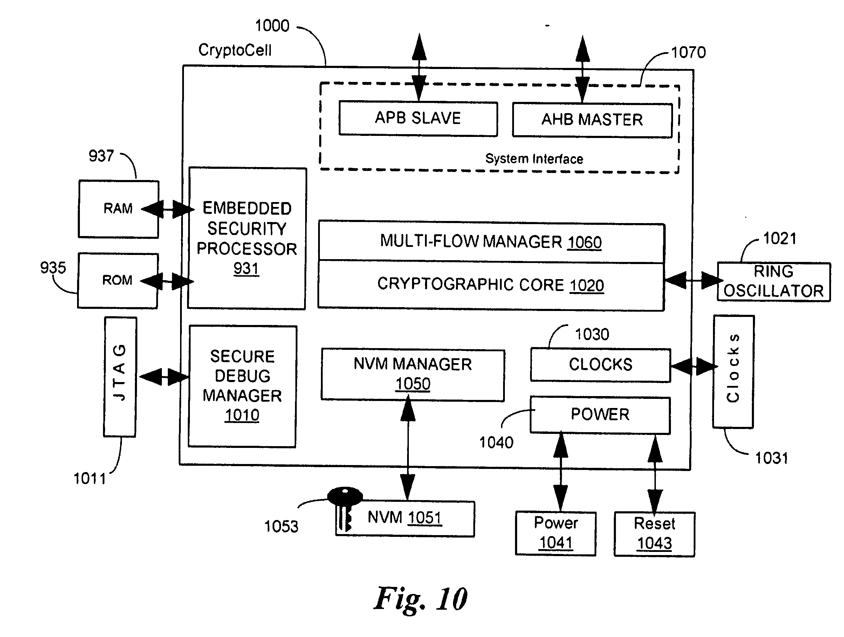

Referring now to Figure 10, there is shown a cryptographic unit having an embedded security processor, according to an embodiment of the invention. The cryptographic cell 1000 has an embedded security processor 931. The security processor 931 may be communicatively coupled to both ROM 935 and system RAM 937. The cryptographic cell 1000 may also contain a secure debug manager 1010. The secure debug manager may be coupled to a joint test action group (JTAG) standard test access port 1011 and boundary-scan architecture for test access ports used for testing printed circuit boards using boundary scan. A cryptographic core 1020 is typically fixed function hardware which may be coupled to a ring oscillator 1021. The cryptographic cell 1000 may have its own clock 1030 and power 1040. The clock 1030 may be driven or synchronized with an external clock 1031. The cryptographic core 1020 may accelerate modular arithmetic used by RSA algorithms or other algorithms for asymmetric and symmetric cryptography used for signing and verifying. Using fixed function hardware for cryptography is typical for a MID system because of the cost of using an X86 processor for these functions, where cost is measured by price, size, efficiency and power requirements. Power to the cryptographic cell 1000 may be driven or reset by external power 1041 and reset 1043 units. The cryptographic cell 1000 may have a non-volatile memory (NVM) manager 1050 to control a non-volatile memory (NVM) unit 1051.

The cryptographic cell 1000 may have a system interface 1070 with an Advanced High-performance Bus (AHB) Master and an Advanced Peripheral Bus (APB) slave. The AHB is the interconnect between the intelligent security processor and the host. The AHB can maintain several outstanding commands. Some of these commands, such as cryptographic operations, may be sent to the APB in order to process them in fixed function hardware. Having fixed function hardware for cryptography can be important because purpose-built circuits for cryptography have better millions of instructions per second (MIPS)/Watt efficiency than performing the cryptography on a generic processor.

In an embodiment, certificates used to ensure that a UEFI boot is verified and authenticated, may be stored in non-volatile memory 1051 accessible to the security processor. Certificates, such as those conforming to the x509v2 standard, each store an *n-*tuple of information. This information may include a public key, date/time for which the certificate is active, and a signature of certificate from some trusted third party (TTP), such as Verisign or the OS vendor. As such, a public key 1053 may be stored on the chipset NVM 1051 of the cryptographic cell 1000 to assist in the verification. Processes used to authenticate the boot will be discussed further, below. In embodiments, certificate signing and key technology used is similar to that used in existing systems using signature keys. However, existing methods cannot be used directly on a MID primary processor without risk of tampering.

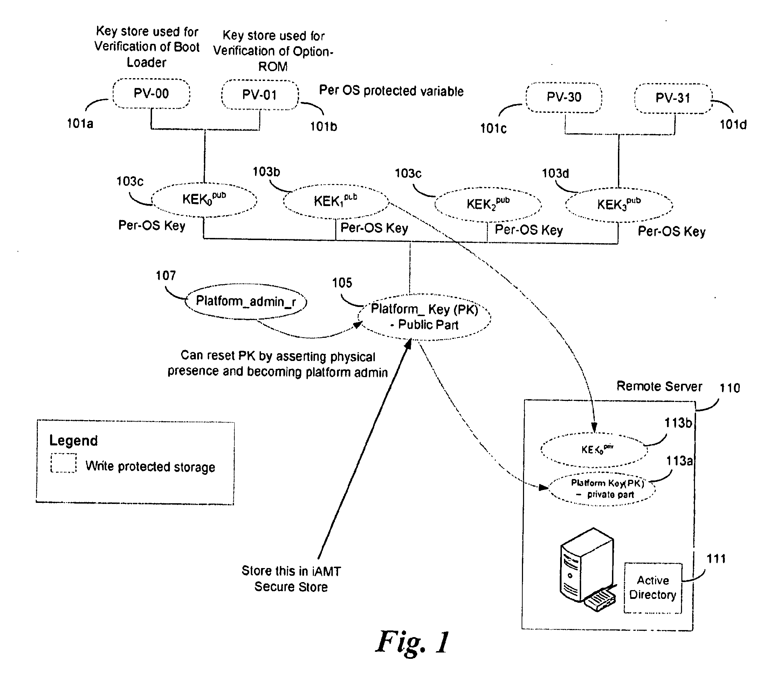

Figure 1 illustrates a hierarchy of signature keys used to ensure boot and system integrity in systems currently using signing technology. This signature hierarchy is a canonical store with a root and leaves. Keys outlined with a broken line may reside in write protected storage. In embodiments of the present invention, this protected storage is accessible to the security device, but not to the primary processor or device operating system. In an exemplary UEFI embodiment, PV-00, PV-01, PV-30 and PV-31 (101a-d) represent keys to protect UEFI protected variables. These protected variables (PVs) point to the signed UEFI loaders and drivers. KeK₀^{pub}, KeK₁^{pub}, KeK₂^{pub} and KeK₃^{pub} (103a-d) represent the public keys that the cryptographic core stores. UEFI firmware, via commands sent to cryptographic core, uses the public key 103 to check a digital signature embedded in the UEFI drivers and loaders to see if the signatures are correct. Some keys may not correspond to a protected variable. Each operating system loader typically has its own key. For instance, a platform may have both a Windows® loader and a Linux loader. Both need to be protected. Each loader will have its own public key. Each OS vendor will typically digitally sign their loader products. The platform key (PK) is the key that the Platform Owner such as a corporate Information Technology (IT) department gives to the platform. The platform uses the PK to encrypt/sign all of the other keys. For instance, the keys, KEKs 103, from OS vendors, or independent hardware vendor (IHV) are encrypted using the PK 105. In other words, the platform firmware uses PK to secure the KEK's.

The Platform_admin_r 107 represents a system, or platform, administrator or IT professional. This administrator will typically turn on the key/signing/encryption feature, and install the PK 105. In some systems, the platform administrator 107 may be present at a management console and remotely install and initiate the secure boot feature by sending commands via a network, such as via Intel active management technology (iAMT) networking, to the UEFI machine. For cellular phone MID systems, the platform administrator may turn on keys/signing via wireless cellular communication or via an Internet connection, assuming a trusted channel (such as TLS/SSL) to the administrative console, or using other art such as OMA (OpenMobileAlliance.org) protocols.

The remote server 110 may hold the private keys, such as a platform key 113a or OS loader key 113b, and certificates and revocation lists in an active directory 111. The active directory 111 is an enterprise registry. The registry may hold information about the managed platforms. A good/valid key list may be stored in the active directory 111. In other systems a manageability engine (ME) or Intel active management technology (iAMT) device accesses the active directory 111 on the remote server 110 to determine whether a key is valid, or has been revoked. In the alternative, the ME may access other remote servers or networks, for instance via the public Internet, to retrieve a list of good or revoked keys. In embodiments of the invention, the security processor is used to manage the keys and certificates. While the certificate list may be stored in non-volatile memory (NVM) accessible to the security processor and not to the primary processor, the certificates may be updated or revoked in the same fashion as described above with Internet access during runtime, or by platform administrator pushing a new set of certificates to the MID via a wireless communication path.

In embodiments, the security processor is an active piece of hardware on the MID. The UEFI Secure Boot adds a Root of Trust for Enforcement of Validation (RTE/RTV), though, which enables the "Secure Boot." An RTE and "Secure Boot" may, in fact, cause the boot to abort if the software state does not meet some integrity metric, such as a hash in a white-list or a digital signature. UEFI enables both cases but advocates the latter since the list of possible hashes may be unbounded, which can be a management nightmare; public keys allow for a level of indirection to map the keys to a few trusted sources, thus, easing the management problems associated with deployment.

Problems addressed by embodiments of the invention include: (1) having a single policy mechanism to manage the certifications of third party UEFI drivers, applications and OS Loaders; and (2) authorizing the execution of third party UEFI drivers, applications and OS Loaders once the platform owner takes the system ownership either in pre-OS or OS.

The security processor enables a trust relationship between the platform owner, the platform firmware, and third party (i.e. OSV, OEM etc). Two types of credentials describing the trust relationship may be employed. First, a *platform credential* may be used to establish the trust relationship between platform owner and firmware. The platform owner creates the platform credential as the root credential containing an asymmetric key pair, which is used to take ownership and enroll any other credentials. Second, a *third party credential* may establish the trust relationship between third party vendors and firmware. Platform owner may enroll trusted third party vendors' credentials, which are used to authorize the execution of the third party executables. This kind of credential may comprise both a vendor generated public key, and vendor specific information.

Since the platform credential contains the private key and is used to enroll third party credentials, the local machine requires explicit private key manipulation (i.e. signing a payload). In a MID, it is difficult to deal with these two issues as in a desktop system, or other existing systems. Thus, embodiments of the invention present a creative way of using a security processor, as the root of trust for storage (RTS), to generate the platform credential and store the private key securely regarding the first issue. As for the latter issue, embodiments use the security processor to perform the signing operation internally which will not expose any private keys.

In an embodiment, two operation modes are defined, in platform owner's perspective: SETUP and USER mode. The security policy will be enforced in latter mode. Specifically, SETUP is where the machine is open to have the certificates provisioned, whereas USER mode is where the UEFI firmware will become the Root-of-Trust for Verification (RTV) and only invoke UEFI OS loaders or drivers that are digitally signed and the associated verification public key is in a certificate installed onto the MID device.

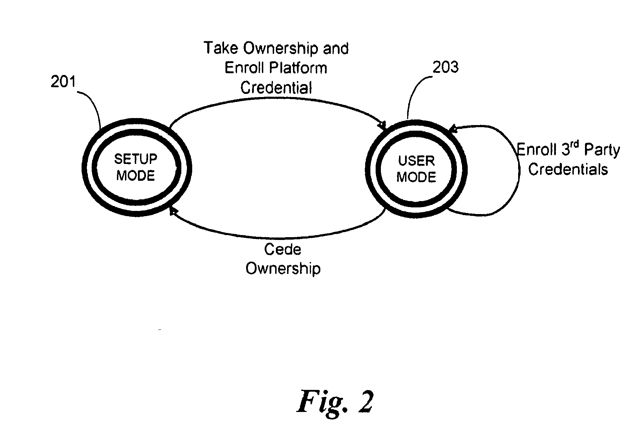

Figure 2 illustrates the flow when the platform owner takes ownership and generates a platform credential by means of the security processor. Figure 2 demonstrates an exemplary implementation. SETUP mode 201 takes ownership and enrolls the platform credential, passing control to the USER mode 203. USER mode 203 enrolls third party credentials. USER mode 203 also cedes ownership back to SETUP mode 201.

This latter operation may occur when a MID system has been attacked by malicious software and the UEFI firmware no longer boots the machine, thus leaving the machine as useful as a doorstop. The natural response is for the owner of the device to send it back to the carner/supplier. Back in the factory, specific hardware indicia / stimuli / or some other mechanism may be used to transfer the machine back from user to setup mode in order to re-provision the credentials and/or the software load on the machine.

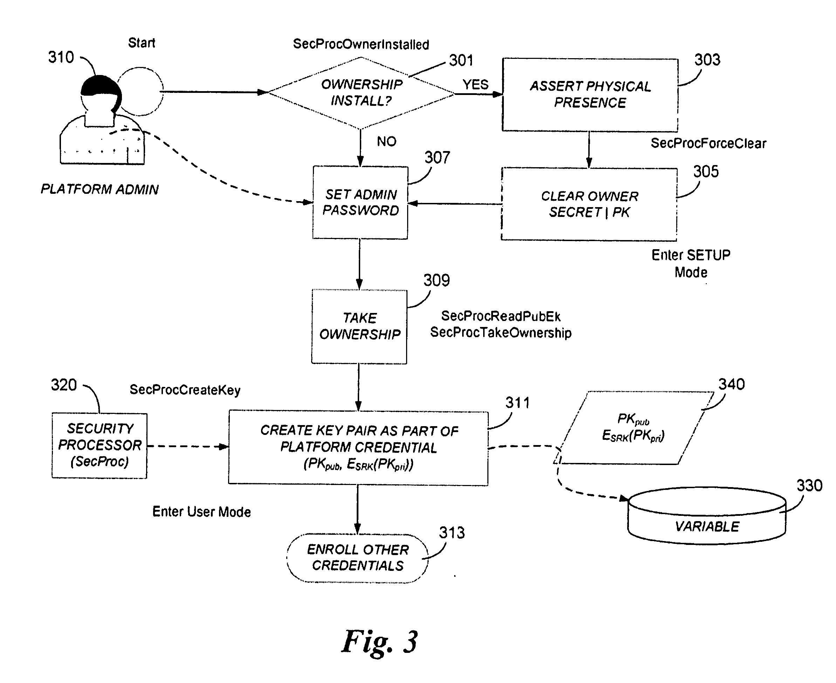

Figure 3 is a flow chart illustrating a method for taking ownership and enrolling platform credentials, according to an embodiment of the invention. This illustrates one possible method for generating or updating a credential database on the device. The platform administrator 310, which in the case of a cellular phone, may be the cellular phone company, determines whether an ownership install is necessary in block 301. If so, the administrator may assert a physical presence, in block 303. This is typically performed during manufacturing, before the device has left control of the administrator. In some embodiments and out-of-band presence may be used rather than a physical presence to enroll credentials. A SecProcForceClear command may be sent to the security processor to clear ownership. The owner is then cleared using a secret platform key (PK), in block 305. SETUP mode is entered on the security processor. When the owner is already installed, and after clearing ownership and entering SETUP mode, the administrative password may be set in block 307. A key pair may now be created as part of the platform credential, in block 309. The key pair 340 may be generated, in block 311, with a public platform key PKpub, encryption operation (E_{SRK}) as a function of the private platform key (PKₚᵣᵢ). The nomenclature *E_{SRK}(PKₚᵣᵢ)* indicates an encryption operation on the private platform key. The encryption operates on a private key *(PKpᵣᵢ)* that never leaves the security processor, thus solving a problem of public key cryptography wherein if someone gets your private key, they own the machine. The security processor proxies these operations on the private key such that the x86 UEFI code never has to handle the private key itself. The key pair may be stored in non-volatile storage 330. A SecProcCreateKey command may be executed in the security processor 320 to generate the key pair. Once the key pair is created, the security processor enters USER mode. Other credentials may be enrolled in block 313.

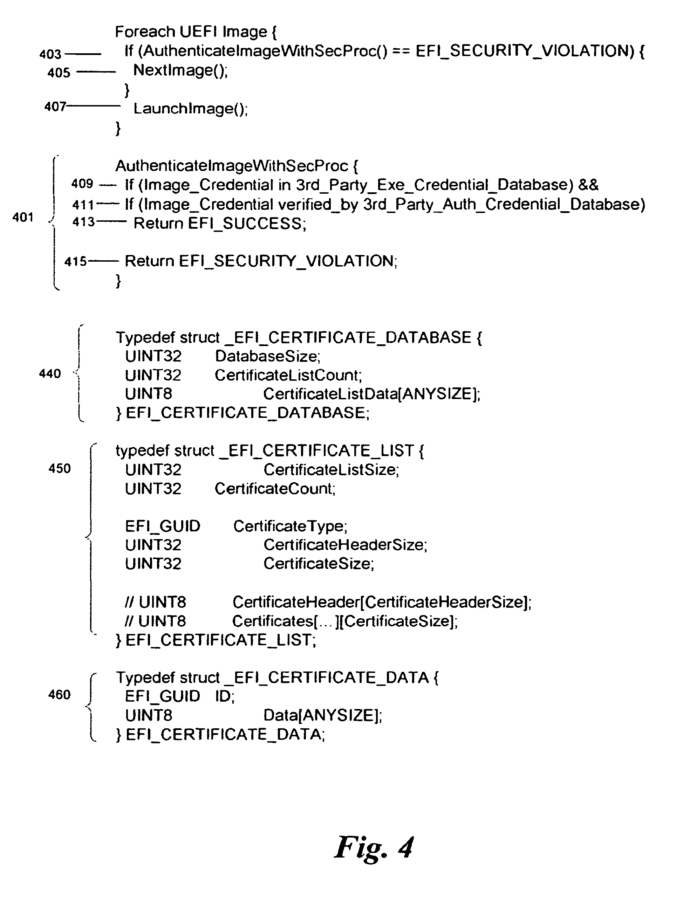

Figure 4 illustrates exemplary C code used to implement an embodiment of the invention. Each image must be authenticated before it is allowed to be loaded and launched. In embodiments, a UEFI image is a typically a Portable Executable and Common Object File Format (PE/COFF) executable image. Each PE/COFF image has a portion called security directory. The security directory contains a digital signature of the image and an associated public key. The hash of the PE/COFF image and associated public key may be passed to the security processor to validate the image. The security processor may retrieve the appropriate certificate from the certificate database and use the cryptograph hardware function on the chipset to verify the image. Referring to Figure 4, for each UEFI Image, a function AuthenticateImageWithSecProc() 401 is executed and a determination 403 is made as to whether a security violation (EFI_SECURITY_VIOLATION) has been returned. If so, a next image (NextImage()) 405 function is executed to authenticate the next image. If the boot, or firmware, image is authenticated, it is launched by executing a LaunchImage() function 407. Authentication of the image with the security processor (AuthenticateImageWithSecProc()) 401 comprises determining if the image credential (Image_Credential) is in a third party credential database 409 and whether the image credential is verified by a third party authentication credential database 411. If so, then the function returns successful 413. If either of these checks fails, then the function returns with a security violation (EFI_SECURITY_VIOLATION) 415.

These credentials may be stored in UEFI EFI certificate database (EFI_CERTIFICATE_DATABASE) type 440, stored in persistent, or non-volatile, storage. Embodiments of the invention may also be used to authorize network-loaded pre-boot execution environment (PXE) images. The security processor may secure this storage with provided NVM and authenticated access.

It should be understood that various operating systems and loaders may use varying formats, i.e., not always PE/COFF. The security processor may be configured to accept formats for all allowable operating systems. Regardless of the format, the image will contain a digital signature and public key to be matched with the certificate database accessible to the security processor and inaccessible to the primary processor on the device.

An example of a data structure that may be used for the certificate database is shown in Figure 4, as well. The EFI_CERTIFICATE_DATABASE 440 may contain a database size, a certificate list count, and certificate list data. The certificate list (EFI_CERTIFICATE_LIST data structure 450 may contain a certificate list size, a certificate count, certificate type, certificate header size, certificate header, and certificates. The certificate data structure may contain an identifier, and data. The identifier may be a globally unique identifier (GUID). The certificate data (EFI_CERTIFICATE_DATA) 460 may be a structure having a GUID and text field of any size.

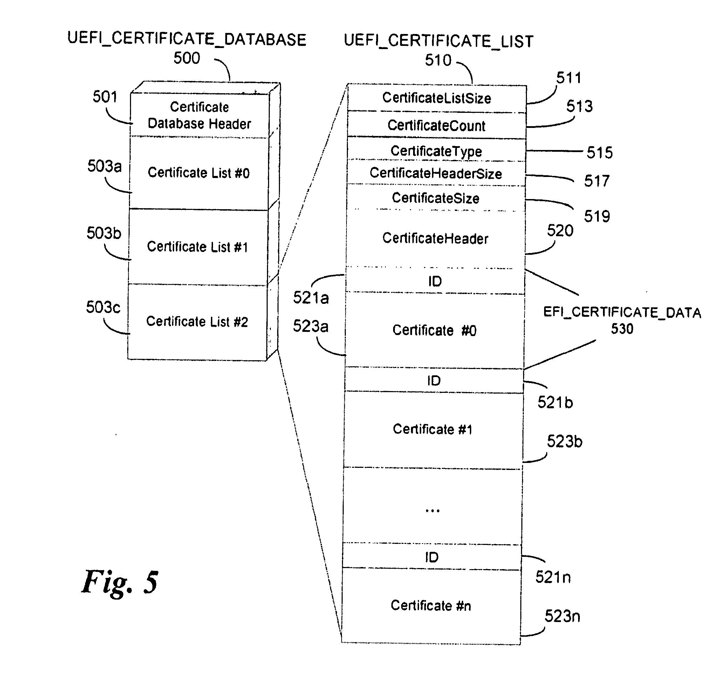

Figure 5 more visually illustrates the structure of the UEFI certificate database 500, according to an embodiment of the invention. The general structure of the database is shown on the left with a header 501, and three certificate lists 503a-c. A certificate list 510 is shown on the right, with a list size 511, certificate count 513, type 515, header size 517, certificate size 519, certificate header 520, and each certificate 530 having an identifier 521 a-n and data 523a-n.

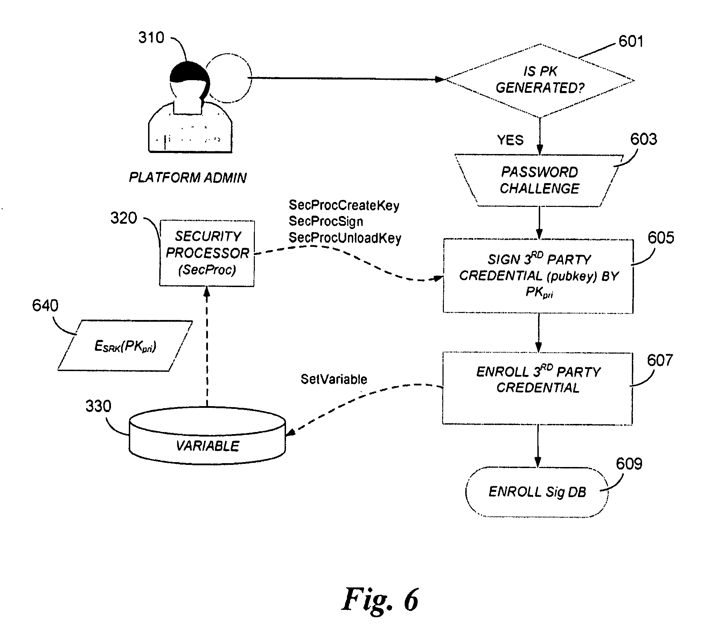

Figure 6 is a flow chart illustrating a method where the platform owner enrolls third party authentication credentials, according to an embodiment of the invention. This enrollment may be used for single authorization execution of a set of associated third party executables, for example, a credential for authenticating all UEFI drivers provided by an OEM. The platform administrator 310 initiates a check to determine whether a platform key (PK) has been generated, in block 601. A password challenge is typically required in block 603 to authenticate the administrator. The administrator authorizes signing of third party credentials, in block 605. This signing may initiate execution of create key (SecProcCreateKey), sign (SecProcSign) and unload key (SecProcUnloadKey) functions in the security processor 320. The appropriate storage root key (E_{SRK}) 640 operation is returned by the security processor, from the non-volatile storage 330. The third party credential is then enrolled in block 607, and the signature is enrolled in the database in 609; specifically, the enrolling of a signature is having a certificate with its public key stored in the tamper-resistant location, or keeping a hash of an executable, for use in subsequent image verification.

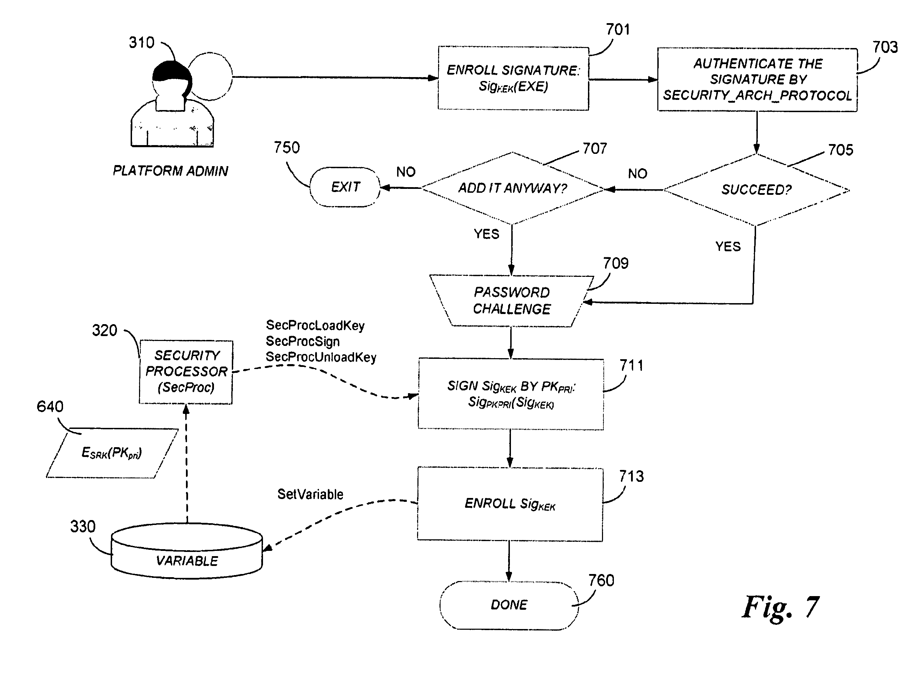

Figure 7 is a flow chart illustrating a method where the platform owner enrolls a signature, according to an embodiment of the invention. This enrollment may be used to authorize the execution of the executable regardless of other executable. The platform administrator 310 initiates enrollment of a signature, in block 701. The signature is authenticated using a Security_Arch_Protocol, in block 703. If the authentication succeeds, as determined in block 705, then a password challenge may be imposed on the administrator in block 709. If the authentication does not succeed, a determination using a platform-vendor specific policy may be made as to whether the signature should be added anyway, in block 707. If not, enrollment exits in block 740 without completion. If the signature is to be added anyway, then processing continues with the password challenge in block 709. Once the administrator has entered the correct password, the key is loaded (SecProcLoadKey), signed (SecProcSign) and then the key is unloaded (SecProcUnloadKey) in block 711, by the security processor 320. The signature is then enrolled in the NVM 330 by setting the variable (SetVariable function), in block 713. The process completes in block 760. This is a process of performing an administrative action to add additional signatures to the database. This may occur if the device owner wishes to launch a new operating system loader or application whose certificate was not enrolled during the device manufacturing.

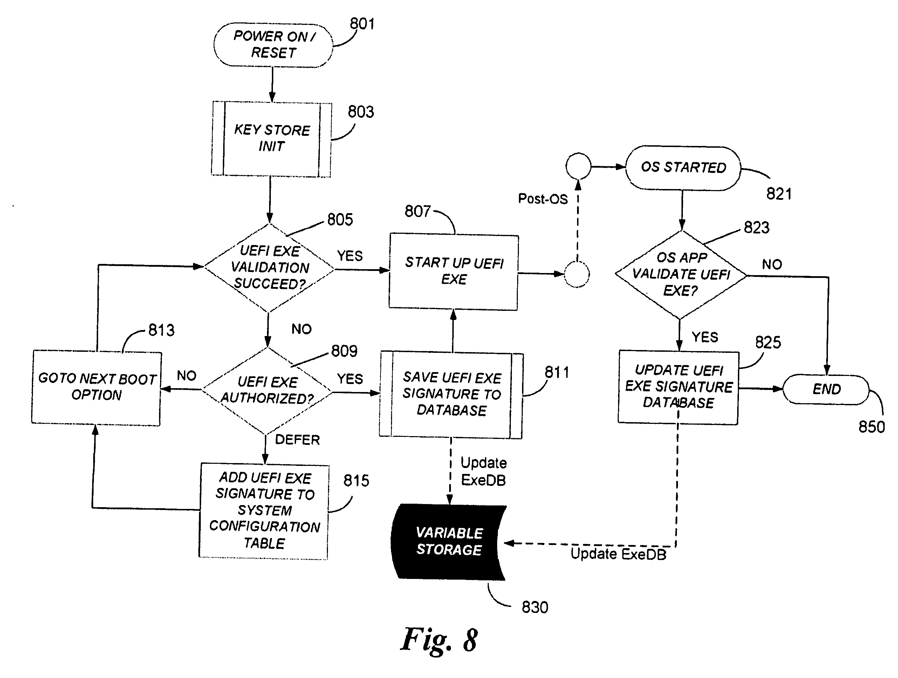

Figure 8 is a flow chart illustrating an exemplary method for authorizing UEFI executables, according to an embodiment of the invention. The MID is powered on or reset at block 801. The initial key is stored at block 803; this can be factory provisioning NVM/database. The security processor determines whether the UEFI validation has succeeded by checking the signature against the public key, as discussed above, in block 805. If the validation fails, then it is determined whether the UEFI executable is authorized, in block 809. An authorized application is one that is signed, has an associated public verification key in the platform, and the digital signature in the UEFI image passes the verification test. A validation action may be performed later, for instance in block 823, where an image may not have been in the database, but during the OS runtime, the OS may communicate with a remote authority and query the status of the image or query a user to determine if the user wishes to enroll/run this image next time).

If the UEFI executable is not authorized, the next boot option may be attempted in block 813. In some cases, this boot option may be a complete failure of the device to boot. In other cases, the boot option may boot a management mode OS, or some lesser functioning OS. Boot may be deferred until the platform administrator can add the UEFI signature to the system configuration table in block 815, with a next boot option attempted in block 813.

When the validation succeeds, then the UEFI executable may be started in block 807. When validation fails, but authorization is granted, the UEFI executable signature may be saved to the database 830, in block 811 before the executable is started in block 807.

Once the OS has been launched in block 821, a determination may be made as to whether the OS application is validated with the UEFI executable, in block 823. If not, the process ends at block 850. If validated, then the UEFI executable signature database is updated in block 825 and the process ends at 850.

Mobile Internet device architecture may purposely steer clear of "PC-compatibility" in order to more closely target the cellular market. In doing so, they omit/lose some of the in-band processor trusted platform technology, such as TXT GETSEC instructions like SENTER. Instead, MID architecture may opt for a specialized integrated security processor, as discussed above. In doing so, MIDs have an eco-system gap to fill of the "OEM Boot module." This "gap" is because BIOS vendors are accustomed to building boot-code for PC/AT platforms. By diverging from PC/AT, traditional BIOS will no longer work on the MIDs. The modular, platform-independent design of the UEFI Platform Initialization (PI) code for early initialization and the UEFI interface for OS loading are advantageous here. UEFI and PI code can be retargeted for this non-traditional (i.e., non-PC/AT) platform. Therein more form may be added via UEFI and also use the inductive security of UEFI secure boot to work hand-in-hand with the security processor to maintain the manufacturer trust into the runtime environment. Specifically, the security processor may be taught to understand signed UEFI PI firmware volumes, and the UEFI implementation in DXE uses the security processor to store certificates (with the public keys used for image verification) and authenticate (i.e. run the 1-way hash functions like SHA and digital signature algorithms like RSA) the UEFI OS loaders and drivers.

Embodiments of the invention use the security processor as root of trust for storage (RTS) to perform key management, such as key generation and storage, as well as some cryptographic operations, such as payload signing, without the risk of exposing private keys, as discussed above. In existing systems, the use of authenticated variables entails having some in-band code sign the *AuthInfo* field of the authenticated variable, which can be dangerous without having shielded locations. The security processor allows for shielded locations and signing the authenticated variable on the platform itself; this is in contrast to some schemes where signing has to occur on a remote signing server off the machine. This latter, off-the-machine signing, is awkward since it then entails synchronizing the mobile device with the remote server whenever an update or administrative action occurs.

Embodiments of the invention also establish a credential hierarchy by deploying the different credentials in top-to-bottom fashion, in another word, from platform credential to third party auth-credential and third party exe-credential. This eliminates the dependency on a single credential and distinguishes the credential issuers as well. Further, embodiments of the invention complement a Single Sign-On scenario. For instance, the platform owner could take ownership in both OS and pre-OS phase with same authorization data.

In addition, embodiments of the invention utilizing the security processor may prohibit the execution of unauthorized code to avoid the damage caused by running malware.

Since Itanium® platforms and MIDs do not have TXT or LT-SX, embodiments of the invention may be used to validate pre-OS executables, including an OS loader, so that malware cannot take advantage of the pre-OS as an attack vector.

The security processor is a hardware based security engine for MID usages such as digital rights management (DRM), trusted boot and secure storage. The security processor may also provide hardware acceleration for cryptographic functions (symmetric, PKI), hashing functions and attestation. The security processor parses DRM license/Rights Object (RO) (e.g., how long a movie can be watched, a song played, etc.) and extracts the key for content decryption, and never exposes keys to system memory. The security processor may also decrypt DRM content using the extracted key from DRM license/RO file.

The techniques described herein are not limited to any particular hardware or software configuration; they may find applicability in any computing, consumer electronics, or processing environment. The techniques may be implemented in hardware, software, or a combination of the two.

For simulations, program code may represent hardware using a hardware description language or another functional description language which essentially provides a model of how designed hardware is expected to perform. Program code may be assembly or machine language, or data that may be compiled and/or interpreted. Furthermore, it is common in the art to speak of software, in one form or another as taking an action or causing a result. Such expressions are merely a shorthand way of stating execution of program code by a processing system which causes a processor to perform an action or produce a result.

Each program may be implemented in a high level procedural or object-oriented programming language to communicate with a processing system. However, programs may be implemented in assembly or machine language, if desired. In any case, the language may be compiled or interpreted.

Program instructions may be used to cause a general-purpose or special-purpose processing system that is programmed with the instructions to perform the operations described herein. Alternatively, the operations may be performed by specific hardware components that contain hardwired logic for performing the operations, or by any combination of programmed computer components and custom hardware components. The methods described herein may be provided as a computer program product that may include a machine accessible medium having stored thereon instructions that may be used to program a processing system or other electronic device to perform the methods.

Program code, or instructions, may be stored in, for example, volatile and/or non-volatile memory, such as storage devices and/or an associated machine readable or machine accessible medium including solid-state memory, hard-drives, floppy-disks, optical storage, tapes, flash memory, memory sticks, digital video disks, digital versatile discs (DVDs), etc., as well as more exotic mediums such as machine-accessible biological state preserving storage. A machine readable medium may include any mechanism for storing, transmitting, or receiving information in a form readable by a machine, and the medium may include a tangible medium through which electrical, optical, acoustical or other form of propagated signals or carrier wave encoding the program code may pass, such as antennas, optical fibers, communications interfaces, etc. Program code may be transmitted in the form of packets, serial data, parallel data, propagated signals, etc., and may be used in a compressed or encrypted format.

Program code may be implemented in programs executing on programmable machines such as mobile or stationary computers, personal digital assistants, cellular telephones and pagers, consumer electronics devices (including DVD players, personal video recorders, personal video players, satellite receivers, stereo receivers, cable TV receivers), and other electronic devices, each including a processor, volatile and/or non-volatile memory readable by the processor, at least one input device and/or one or more output devices. Program code may be applied to the data entered using the input device to perform the described embodiments and to generate output information. The output information may be applied to one or more output devices. One of ordinary skill in the art may appreciate that embodiments of the disclosed subject matter can be practiced with various computer system configurations, including multiprocessor or multiple-core processor systems, minicomputers, as well as pervasive or miniature computers or processors that may be embedded into virtually any device. Embodiments of the disclosed subject matter can also be practiced in distributed computing environments where tasks or portions thereof may be performed by remote processing devices that are linked through a communications network.

Although operations may be described as a sequential process, some of the operations may in fact be performed in parallel, concurrently, and/or in a distributed environment, and with program code stored locally and/or remotely for access by single or multi-processor machines. In addition, in some embodiments the order of operations may be rearranged without departing from the spirit of the disclosed subject matter. Program code may be used by or in conjunction with embedded controllers.

## Claims

1. A system for secure boot on a mobile platform (900), comprising:
a host processor (911) configured to execute a host operating system (955) and host applications;
firmware for booting the host processor, the Firmware to utilize one or more signature keys during boot, each signature key associated with a software image (921) to be loaded on the platform during boot, wherein the one or more signature keys comprise at least one of a platform key, a protected variable key, or a public key;
a security processor on the platform configured to manage the one or more signature keys to control image loading during boot;
a secure memory store (920) communicatively coupled to the security processor to store the firmware for booting the host processor, the secure memory store is accessible to the security processor and inaccessible to the host processor; and
wherein the security processor is further configured to: (i) determine whether the firmware for booting the host processor is digitally signed and authorized to be loaded on the host processor, and (ii) copy the firmware for booting the host processor to a memory store (905) accessible to the host processor in response to a determination that the firmware for booting the host processor is digitally signed and authorized to be loaded on the host processor, the memory store accessible to the host processor is different from the secure memory store accessible to the security processor;
wherein the firmware will not load or launch the software image if the signature key associated with the software image fails validation, and wherein validation failure is a result of at least one of an expired certificate, a missing certificate or a revoked certificate.

2. The system of claim 1, wherein the security processor resides on a chipset coupled to a cryptographic core configured to assist in verifying digital signatures.

3. The system of claim 2, further comprising:
a public key coupled to a chipset on the platform; and
a certificate database stored in the secure memory store, wherein the certificate database comprises a plurality of certificates where each certificate corresponds to one of a plurality of software images capable of being executed by the host processor, and wherein the security processor is further configured to verify each software image to be loaded on the host processor against the corresponding certificate in the certificate database and a digital signature embedded in the software image, the verification to use the public key coupled to the chipset.

4. The system of claim 3, wherein the security processor is further configured to: (i) enable a platform administrator to take ownership of the mobile platform and (ii) enable the platform administrator to enroll credentials in the certificate database, wherein the credentials comprise at least one of a platform credential and a third party credential.

5. The system of claim 3, wherein the software image is compatible with unified extensible firmware interface (UEFI) architecture.

6. The system of claim 1, wherein the one or more signature keys comprise a hierarchy of signature keys where a higher level key protects a lower level key.

7. The system of claim 6, wherein the platform key is a higher level than a protected variable key which is a higher level than a public key, wherein a public key is associated with each software image to be loaded during boot.

8. The system of claim 1, further comprising a wireless communication path to allow a remote platform administrator to update a certificate database coupled to the security processor.

9. A method for secure boot on a mobile platform, comprising:
commencing a secure boot of a host processor of the platform;
determining, by a security processor of the platform, whether a boot module stored in a secure non-volatile memory accessible to the security processor is digitally signed and authorized to be loaded on the host processor, the secure non-volatile memory is inaccessible to the host processor;
wherein in response to determining that the boot module is digitally signed and authorized to be loaded on the host processor:
copying the boot module to a memory accessible to the host processor, the memory accessible to the host processor is different from the secure non-volatile memory accessible to the security processor;
loading and executing the boot module on the host processor;
determining, by the security processor, whether at least one software image of a plurality of software images to be loaded after the boot module is authorized to be loaded on the host processor; and
one of: (i) loading the at least one software image of the plurality of software images on the host processor for execution in response to determining that the at least one software image of the plurality of software images is authorized to be loaded on the host processor, or (ii) not loading the at least one software image of the plurality of software images on the host processor in response to determining that the at least one software image of the plurality of software images is not authorized to be loaded on the host processor; and
wherein in response to determining that the boot module is not digitally signed or authorized to be loaded on the host processor, at least one of: (i) authorizing the boot module by a platform administrator, or (ii) failing to boot the platform.

10. The method of claim 9, wherein the security processor has wireless communication capabilities; and
wherein the method further comprises managing, by the security processor, credentials in a certificate database stored in the secure non-volatile memory accessible to the security processor, via a wireless communication path with a remote administrator having information relating to the credentials.

11. The method of claim 9, wherein determining whether a boot module is digitally signed and authorized to be loaded on the host processor comprises: (i) determining if the boot module has an image credential in a certificate database stored in the secure non-volatile memory accessible to the security processor, and (ii) determining if the boot module image credential is verified against the image credential in the certificate database; and
wherein determining by the security processor whether at least one software image of a plurality of software images to be loaded after the boot module is authorized to be loaded on the host processor comprises: (i) determining if each of the plurality of software images has a corresponding image credential in the certificate database, and (ii) determining if each of the software image credentials is verified against the image credential in the certificate database.

12. A machine-readable medium comprising a plurality of instructions that in response to being executed result in a computing device carrying out a method according to any one of claims 9 to 11.

## Patentansprüche

1. System zum sicheren Booten auf einer Mobil-Plattform (900), umfassend:
einen Hostprozessor (911), der dafür ausgelegt ist, ein Host-Betriebssystem (955) und Hostanwendungen auszuführen;
Firmware zum Booten des Hostprozessors, wobei die Firmware während des Bootens einen oder mehrere Signaturschlüssel benutzen soll, wobei jeder Signaturschlüssel einem während des Bootens auf der Plattform zu ladenden Softwarebild (921) zugeordnet ist, wobei der eine oder die mehreren Signaturschlüssel einen Plattformschlüssel und/oder einen geschützte-Variable-Schlüssel und/oder einen öffentlichen Schlüssel umfassen;
einen Sicherheitsprozessor auf der Plattform, der dafür ausgelegt ist, den einen oder die mehreren Signaturschlüssel zur Steuerung des Bildladens während des Bootens zu verwalten;
eine mit dem Sicherheitsprozessor kommunikativ gekoppelte sichere Speicher-Speicherung (920) zum Speichern der Firmware zum Booten des Hostprozessors, wobei die sichere Speicher-Speicherung dem Sicherheitsprozessor zugänglich und dem Hostprozessor unzugänglich ist; und
wobei der Sicherheitsprozessor ferner ausgelegt ist zum (i) Bestimmen, ob die Firmware zum Booten des Hostprozessors digital signiert und zum Laden auf dem Hostprozessor autorisiert ist, und (ii) Kopieren der Firmware zum Booten des Hostprozessors in eine Speicher-Speicherung (905), die dem Hostprozessor zugänglich ist, als Reaktion auf ein Bestimmen, dass die Firmware zum Booten des Hostprozessors digital signiert und zum Laden auf dem Hostprozessor autorisiert ist, wobei die dem Hostprozessor zugängliche Speicher-Speicherung von der dem Sicherheitsprozessor zugänglichen sicheren Speicher-Speicherung verschieden ist;
wobei die Firmware das Softwarebild nicht laden oder starten wird, wenn der dem Softwarebild zugeordnete Signaturschlüssel bei der Validierung fehlschlägt, und wobei Validierungsfehlschlag ein Ergebnis eines abgelaufenen Zertifikats und/oder eines fehlenden Zertifikats und/oder eines widerrufenen Zertifikats ist.

2. System nach Anspruch 1, wobei der Sicherheitsprozessor auf einem Chipsatz residiert, der mit einem kryptographischen Kern gekoppelt ist, der dafür ausgelegt ist, beim Verifizieren von digitalen Signaturen zu helfen.

3. System nach Anspruch 2, ferner umfassend:
einen mit einem Chipsatz auf der Plattform gekoppelten öffentlichen Schlüssel; und
eine in der sicheren Speicher-Speicherung gespeicherte Zertifikatdatenbank, wobei die Zertifikatdatenbank mehrere Zertifikate umfasst, wobei jedes Zertifikat einem von mehreren Softwarebildern entspricht, die durch den Hostprozessor ausgeführt werden können, und wobei der Sicherheitsprozessor ferner dafür ausgelegt ist, jedes auf dem Hostprozessor zu ladende Softwarebild gegen das entsprechende Zertifikat in der Zertifikatdatenbank und eine in das Softwarebild eingebettete digitale Signatur zu verifizieren, wobei die Verifikation den mit dem Chipsatz gekoppelten öffentlichen Schlüssel verwenden soll.

4. System nach Anspruch 3, wobei der Sicherheitsprozessor ferner dafür ausgelegt ist, (i) einem Plattformadministrator zu ermöglichen, Eigentümerschaft der Mobil-Plattform zu übernehmen, und (ii) dem Plattformadministrator zu ermöglichen, Berechtigungsnachweise in der Zertifikatdatenbank einzuschreiben, wobei die Berechtigungsnachweise einen Plattformberechtigungsnachweis und/oder einen Berechtigungsnachweis für Dritte umfassen.

5. System nach Anspruch 3, wobei das Softwarebild mit der Architektur der Unified Extensible Firmware Interface (UEFI) kompatibel ist.

6. System nach Anspruch 1, wobei der eine oder die mehreren Signaturschlüssel eine Hierarchie von Signaturschlüsseln umfassen, wobei ein Schlüssel auf höherer Ebene einen Schlüssel auf niedrigerer Ebene schützt.

7. System nach Anspruch 6, wobei der Plattformschlüssel auf einer höheren Ebene als ein geschützte-Variable-Schlüssel ist, der auf einer höheren Ebene als ein öffentlicher Schlüssel ist, wobei ein öffentlicher Schlüssel jedem während des Bootens zu ladenden Softwarebild zugeordnet ist.

8. System nach Anspruch 1, das ferner einen drahtlosen Kommunikationspfad umfasst, um es einem Fern-Plattformadministrator zu erlauben, eine mit dem Sicherheitsprozessor gekoppelte Zertifikatdatenbank zu aktualisieren.

9. Verfahren zum sicheren Booten auf einer Mobil-Plattform, umfassend:
Beginnen eines sicheren Bootens eines Hostprozessors der Plattform;
Bestimmen durch einen Sicherheitsprozessor der Plattform, ob ein in einem dem Sicherheitsprozessor zugänglichen sicheren nichtflüchtigen Speicher gespeichertes Bootmodul digital signiert und zum Laden auf dem Hostprozessor autorisiert ist, wobei der sichere nichtflüchtige Speicher dem Hostprozessor unzugänglich ist;
mit den folgenden Schritten als Reaktion auf das Bestimmen, dass das Bootmodul digital signiert und zum Laden auf dem Hostprozessor autorisiert ist:
Kopieren des Bootmoduls in einen dem Hostprozessor zugänglichen Speicher, wobei der dem Hostprozessor zugängliche Speicher von dem dem Sicherheitsprozessor zugänglichen sicheren nichtflüchtigen Speicher verschieden ist;
Laden und Ausführen des Bootmoduls auf dem Hostprozessor;
Bestimmen durch den Sicherheitsprozessor, ob mindestens ein Softwarebild mehrerer nach dem Bootmodul zu ladenden Softwarebilder zum Laden auf dem Hostprozessor autorisiert ist; und
entweder (i) Laden des mindestens einen Softwarebilds der mehreren Softwarebilder auf dem Hostprozessor zur Ausführung als Reaktion auf das Bestimmen, dass das mindestens eine Softwarebild der mehreren Softwarebilder zum Laden auf dem Hostprozessor autorisiert ist, oder (ii) Nichtladen des mindestens einen Softwarebilds der mehreren Softwarebilder auf dem Hostprozessor als Reaktion auf das Bestimmen, dass das mindestens eine Softwarebild der mehreren Softwarebilder nicht zum Laden auf dem Hostprozessor autorisiert ist; und
mit den folgenden Schritten als Reaktion auf das Bestimmen, dass das Bootmodul nicht digital signiert oder zum Laden auf dem Hostprozessor autorisiert ist: (i) Autorisieren des Bootmoduls durch einen Plattformadministrator und/oder (ii) Auslassen des Bootens der Plattform.

10. Verfahren nach Anspruch 9, wobei der Sicherheitsprozessor drahtlose Kommunikationsfähigkeiten aufweist; und
wobei das Verfahren ferner das Verwalten von Berechtigungsnachweisen in einer Zertifikatdatenbank, die in dem dem Sicherheitsprozessor zugänglichen sicheren nichtflüchtigen Speicher gespeichert ist, durch den Sicherheitsprozessor über einen drahtlosen Kommunikationspfad umfasst, mit einem Fern-Administrator, der Informationen in Bezug auf die Berechtigungsnachweise hat.

11. Verfahren nach Anspruch 9, wobei das Bestimmen, ob ein Bootmodul digital signiert und zum Laden auf dem Hostprozessor autorisiert ist, Folgendes umfasst: (i) Bestimmen, ob das Bootmodul einen Bildberechtigungsnachweis in einer Zertifikatdatenbank aufweist, die in dem dem Sicherheitsprozessor zugänglichen sicheren nichtflüchtigen Speicher gespeichert ist, und (ii) Bestimmen, ob der Bootmodul-Bildberechtigungsnachweis verifiziert ist gegen den Bildberechtigungsnachweis in der Zertifikatdatenbank; und
wobei das Bestimmen durch den Sicherheitsprozessor, ob mindestens ein Softwarebild mehrerer nach dem Bootmodul zu ladender Softwarebilder zum Laden auf dem Hostprozessor autorisiert ist, Folgendes umfasst: (i) Bestimmen, ob jedes der mehreren Softwarebilder einen entsprechenden Bildberechtigungsnachweis in der Zertifikatdatenbank aufweist, und (ii) Bestimmen, ob jeder der Softwarebildberechtigungsnachweise verifiziert ist gegen den Bildberechtigungsnachweis in der Zertifikatdatenbank.

12. Maschinenlesbares Medium, das mehrere Anweisungen umfasst, die als Reaktion auf Ausführung dazu führen, dass eine Datenverarbeitungsvorrichtung ein Verfahren nach einem der Ansprüche 9 bis 11 ausführt.

## Revendications

1. Système pour sécuriser une amorce sur une plate-forme mobile (900), comprenant :
un processeur hôte (911) configuré pour exécuter un système d'exploitation hôte (955) et des applications hôtes ;
un microprogramme pour amorcer le processeur hôte, le microprogramme utilisant une ou plusieurs clés de signature lors du démarrage, chaque clé de signature étant associée à une image de logiciel (921) à charger sur la plate-forme pendant le démarrage, où la ou les clés de signature comprennent au moins une clé parmi une clé de plate-forme, une clé variable protégée, et une clé publique ;
un processeur de sécurité sur la plate-forme configuré pour gérer la ou les clés de signature pour contrôler le chargement de l'image lors de l'amorçage ;
un stockage à mémoire sécurisé (920) couplé de manière communicative au processeur de sécurité pour stocker le microprogramme pour amorcer le processeur hôte, le stockage à mémoire sécurisé étant accessible au processeur de sécurité et inaccessible au processeur hôte ; et
où le processeur de sécurité est en outre configuré pour : (i) déterminer si le microprogramme pour amorcer le processeur hôte est signé numériquement et autorisé à être chargé sur le processeur hôte, et (ii) copier le microprogramme pour amorcer le processeur hôte au niveau d'un stockage à mémoire (905) accessible au processeur hôte en réponse à une détermination que le microprogramme pour amorcer le processeur hôte est signé numériquement et autorisé à être chargé sur le processeur hôte, le stockage à mémoire accessible au processeur hôte étant différent du stockage à mémoire sécurisé accessible au processeur de sécurité ;
où le microprogramme ne chargera pas, ni ne lancera, l'image de logiciel si la clé de signature associée à l'image de logiciel n'est pas validée, et où l'échec de validation est le résultat d'au moins un certificat parmi un certificat expiré, un certificat manquant ou un certificat révoqué.

2. Système selon la revendication 1, dans lequel le processeur de sécurité réside sur un jeu de composants couplé à un coeur cryptographique configuré pour l'aider à vérifier les signatures numériques.

3. Système selon la revendication 2, comprenant en outre :
une clé publique couplée à un jeu de composants sur la plate-forme ; et
une base de données de certificats stockée dans le stockage à mémoire sécurisé où la base de données de certificats comprend une pluralité de certificats, où chaque certificat correspond à l'une d'une pluralité d'images de logiciel capables d'être exécutées par le processeur hôte, et où le processeur de sécurité est en outre configuré pour vérifier chaque image de logiciel devant être chargée sur le processeur hôte quant au certificat correspondant dans la base de données de certificats et une signature numérique intégrée dans l'image de logiciel, la vérification de l'utilisation de la clé publique étant couplée au jeu de composants.

4. Système selon la revendication 3, dans lequel le processeur de sécurité est en outre configuré pour :
(i) permettre à un administrateur de plate-forme de s'approprier la plate-forme mobile et (ii) permettre à l'administrateur de plate-forme d'inscrire des informations d'identification dans la base de données de certificats, où les informations d'identification comprennent au moins des informations d'identification parmi des informations d'identification de plate-forme et des informations d'identification tierces.

5. Système selon la revendication 3, dans lequel l'image de logiciel est compatible avec une architecture d'interface de microprogramme extensible unifiée (UEFI).

6. Système selon la revendication 1, dans lequel une ou plusieurs clés de signature comprennent une hiérarchie de clés de signature où une clé de niveau supérieur protège une clé de niveau inférieur.

7. Système selon la revendication 6, dans lequel la clé de plate-forme a un niveau supérieur à une clé variable protégée qui a un niveau supérieur à une clé publique, où une clé publique est associée à chaque image de logiciel à charger lors du démarrage.

8. Système selon la revendication 1, comprenant en outre un chemin de communication sans fil pour permettre à un administrateur de plate-forme distante de mettre à jour une base de données de certificats couplée au processeur de sécurité.

9. Procédé pour sécuriser une amorce sur une plate-forme mobile, comprenant les étapes suivantes :
initier une amorce sécurisée d'un processeur hôte de la plate-forme ;
déterminer, par un processeur de sécurité de la plate-forme, si un module d'amorçage stocké dans une mémoire non volatile sécurisée accessible au processeur de sécurité est signé numériquement et autorisé à être chargé sur le processeur hôte, la mémoire non volatile sécurisée étant inaccessible au processeur hôte ;
où, en réponse à la détermination que le module d'amorçage est signé numériquement et autorisé à être chargé sur le processeur hôte :
copier le module d'amorçage sur une mémoire accessible au processeur hôte, la mémoire accessible au processeur hôte étant différente de la mémoire non volatile sécurisée accessible au processeur de sécurité ;
charger et exécuter le module d'amorçage sur le processeur hôte ;
déterminer, par le processeur de sécurité, si au moins une image de logiciel d'une pluralité d'images de logiciel doit être chargée après que le module d'amorçage a été autorisé à être chargé sur le processeur hôte ; et
soit : (i) charger l'au moins une image de logiciel de la pluralité d'images de logiciel sur le processeur hôte pour une exécution en réponse à la détermination que l'au moins une image de logiciel de la pluralité d'images de logiciel est autorisée à être chargée sur le processeur hôte, soit : (ii) ne pas charger l'au moins une image de logiciel de la pluralité d'images de logiciel sur le processeur hôte en réponse à la détermination que l'au moins une image de logiciel de la pluralité d'images de logiciel n'est pas autorisée à être chargée sur le processeur hôte ; et
où, en réponse à la détermination que le module d'amorçage n'est pas signé numériquement ou autorisé à être chargé sur le processeur hôte, exécuter au moins une des étapes suivantes : (i) autoriser le module d'amorçage par un administrateur de réseau, ou (ii) mettre en échec l'amorçage de la plate-forme.

10. Procédé selon la revendication 9, dans lequel le processeur de sécurité dispose de capacités de communication sans fil ; et
dans lequel le procédé comprend en outre de gérer, par le processeur de sécurité, des informations d'identification dans une base de données de certificats stockée dans la mémoire non volatile sécurisée accessible au processeur de sécurité, par l'intermédiaire d'un chemin de communication sans fil avec un administrateur distant ayant des informations concernant les informations d'identification.

11. Procédé selon la revendication 9, dans lequel déterminer si un module d'amorçage est signé numériquement et autorisé à être chargé sur le processeur hôte comprend les étapes suivantes : (i) déterminer si le module d'amorçage dispose d'informations d'identification d'image dans une base de données de certificats stockée dans la mémoire non volatile sécurisée accessible au processeur de sécurité, et (ii) déterminer si les informations d'identification d'image de module d'amorçage sont vérifiées quant aux informations d'identification d'image dans la base de données de certificats ; et
dans lequel déterminer par le processeur de sécurité si au moins une image de logiciel de la pluralité d'images de logiciel à charger après que le module d'amorçage a été autorisé à être chargé sur le processeur hôte comprend les étapes suivantes : (i) déterminer si chacune de la pluralité d'images de logiciel dispose d'informations d'identification d'image correspondantes dans la base de données de certificats, et (ii) déterminer si chacune des informations d'identification d'image de logiciel est vérifiée quant aux informations d'identification d'image dans la base de données de certificats.

12. Support lisible par machine comprenant une pluralité d'instructions qui, en réponse à leur exécution, conduisent à ce qu'un dispositif informatique exécute un procédé selon l'une quelconque des revendications 9 à 11.
